# EUROPEAN PATENT APPLICATION

(11) **EP 4 597 939 A1**
(43) Date of publication of application: **06.08.2025**
(21) Application number: 22959767.9
(22) Date of filing: 26.09.2022
(51) Int. Cl.: H04L 27/00

(54) **TRANSMISSION MULTIPLEXING MODE INDICATION METHOD AND DEVICE, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/121480
(87) International publication number: WO 2024/065115

(57) **Abstract**

The present application relates to the field of communications, and discloses a transmission multiplexing mode indication method and device, a medium, and a product. The method comprises: receiving first indication, the first indication being used for indicating that a terminal is to be scheduled to a transmission multiplexing mode applied in multi-panel simultaneous transmission from multiple panels to multiple transmission and reception points (TRPs). The method is used for supporting dynamic switching indication between transmission multiplexing modes applied in simultaneous uplink transmission of a terminal via multiple antenna panels, so that the indication and dynamic switching of transmission multiplexing schemes can be better and more flexibly supported.

## Description

### TECHNICAL FIELD

The present disclosure relates to the field of communications, and in particular to a method and apparatus for indicating a transmission multiplexing mode, and a medium and product.

### BACKGROUND

In order to ensure the reliability and throughput of transmission, the related technology provides a method for realizing Simultaneous Transmission via Multiple Panels (STxMP) from multiple antenna panels on the terminal towards the direction of the Transmission and Reception Points (TRPs) of multiple base stations.

In the related technology, the transmission is accomplished towards the direction of the Transmission and Reception Points (TRPs) of multiple base stations through the Physical Uplink Shared Channel (PUSCH). In R17, the collaborative transmission in the Time Division Multiplexing (TDM) transmission mode is mainly standardized. The same information is repeated on PUSCH to different TRPs of the base station in a multiplexing way through different Transmission Occasions (TOs) in time domain. However, this approach has a large transmission delay.

Therefore, the introduction of other transmission multiplexing modes and the indication problem about switching between the transmission multiplexing modes need to be solved.

### SUMMARY

The embodiments of the present disclosure provide a method and an apparatus for indicating a transmission multiplexing mode, and a medium and product. The technical solution is as follows.

According to an aspect of the embodiments of the present disclosure, a method for indicating a transmission multiplexing mode is provided. The method is performed by a terminal, and includes:
receiving first indication, where the first indication indicates the transmission multiplexing mode applied when the terminal is scheduled to perform a multi-panel simultaneous transmission from multiple panels to multiple Transmission and Reception Points (TRPs).

According to an aspect of the embodiments of the present disclosure, a method for indicating a transmission multiplexing mode is provided. The method is performed by a network device, and includes:
sending first indication, where the first indication indicates the transmission multiplexing mode applied when a terminal is scheduled to perform a multi-panel simultaneous transmission from multiple panels to multiple Transmission and Reception Points (TRPs).

According to another aspect of the embodiments of the present disclosure, an apparatus for indicating a transmission multiplexing mode is provided. The apparatus includes:
a receiving module, configured to receive first indication, where the first indication indicates the transmission multiplexing mode applied when a terminal is scheduled to perform a multi-panel simultaneous transmission from multiple panels to multiple Transmission and Reception Points (TRPs).

According to another aspect of the embodiments of the present disclosure, an apparatus for indicating a transmission multiplexing mode is provided. The apparatus includes:
a sending module, configured to send first indication, where the first indication indicates the transmission multiplexing mode applied when a terminal is scheduled to perform a multi-panel simultaneous transmission from multiple panels to multiple Transmission and Reception Points (TRPs).

According to another aspect of the embodiments of the present disclosure, a terminal is provided, the terminal including:
a processor; and
a transceiver connected to the processor.

The processor is configured to load and execute executable instructions to implement the method for indicating the transmission multiplexing mode in various aspects as above.

According to another aspect of the embodiments of the present disclosure, a network device is provided, the network device including:
a processor; and
a transceiver connected to the processor.

The processor is configured to load and execute executable instructions to implement the method for indicating the transmission multiplexing mode in various aspects as above.

According to another aspect of the embodiments of the present disclosure, a chip is provided. The chip includes a programmable logic circuit and/or program instructions. When the chip is running, the method for indicating the transmission multiplexing mode in various aspects as above is implemented.

According to another aspect of the embodiments of the present disclosure, a computer-readable storage medium is provided, having at least one instruction, at least one program, a code set, or an instruction set stored therein. The at least one instruction, the at least one program, the code set, or the instruction set is loaded and executed by a processor to implement the method for indicating the transmission multiplexing mode in various aspects as above.

According to another aspect of the embodiments of the present disclosure, a computer program product (or computer program) is provided, which includes computer instructions. The computer instructions are stored in a computer-readable storage medium. The processor of the computer device reads the computer instructions from the computer-readable storage medium, and the processor executes the computer instructions, so that the computer device is caused to perform the method for indicating the transmission multiplexing mode in various aspects as above.

The technical solution provided by the embodiments of the present disclosure may include the following beneficial effects.

In order to support the indication about the dynamic switching between the transmission multiplexing modes applied when the terminal performs uplink transmissions simultaneously based on multiple antenna panels, the transmission multiplexing mode is indicated by a first indication, so that the terminal can flexibly switch between the transmission multiplexing modes when it is scheduled to perform a multi-panel simultaneous transmission from multiple panels to multiple TRPs.

It should be understood that the above general description and the detailed description below are only examples and explanatory, and cannot limit the present disclosure.

### BRIEF DESCRIPTION OF THE DRAWINGS

In order to more clearly illustrate the technical solutions in the embodiments of the present disclosure, the following will briefly introduce the drawings required for the description of the embodiments. It shall be noted that the drawings described below are only some embodiments of the present disclosure. For those of ordinary skills in the art, other drawings can be obtained based on these drawings without creative work.
Fig. 1 shows a schematic diagram of a communication system provided by an example embodiment of the present disclosure;
Fig. 2 shows a schematic diagram of a communication system provided by an example embodiment of the present disclosure;
Fig. 3 shows a schematic diagram of an uplink transmission process provided by an example embodiment of the present disclosure;
Fig. 4 shows a schematic diagram of an uplink transmission process provided by an example embodiment of the present disclosure;
Fig. 5 shows a schematic diagram of a transmission scheme provided by an example embodiment of the present disclosure;
Fig. 6 shows a schematic diagram of a transmission scheme provided by an example embodiment of the present disclosure;
Fig. 7 shows a schematic diagram of the DCI information fields provided by an example embodiment of the present disclosure;
Fig. 8 shows a flow chart of a method for indicating a transmission multiplexing mode provided by an example embodiment of the present disclosure;
Fig. 9 shows a flow chart of a method for indicating a transmission multiplexing mode provided by an example embodiment of the present disclosure;
Fig. 10 shows a block diagram of an apparatus for indicating a transmission multiplexing mode provided by an example embodiment of the present disclosure;
Fig. 11 shows a block diagram of an apparatus for indicating a transmission multiplexing mode provided by an example embodiment of the present disclosure;
Fig. 12 shows a schematic structural diagram of a terminal provided by an example embodiment of the present disclosure; and
Fig. 13 shows a schematic structural diagram of a network device provided by an example embodiment of the present disclosure.

### DETAILED DESCRIPTION OF THE EMBODIMENTS

Here, example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all the embodiments consistent with the present application. Instead, they are only examples of apparatuses and methods consistent with some aspects of the present application as detailed in the attached claims. In the description of the present disclosure, unless otherwise indicated, "/" means or. For example, A/B may mean A or B. The phrase "and/or" in this document is only a description of the association relationship between associated objects, indicating that there may be three relationships. For example, A and/or B may indicate three cases: A exists alone, A and B exist at the same time, and B exists alone.

The terms used in the present application are only for the purpose of describing specific embodiments, and are not intended to limit the present application. The singular forms of "a", "said", and "the" used in the present application and the attached claims are also intended to include plural forms, unless the context clearly indicates other meanings. It should also be understood that the term "and/or" used in this document refers to and includes any or all possible combinations of one or more associated items as listed.

It should be understood that although the terms first, second, third, etc. may be used in the present application to describe various information, these information should not be limited to these terms. These terms are only used to distinguish the same type of information from each other. For example, without departing from the scope of the present application, the first information may also be referred to as the second information, and similarly, the second information may also be referred to as the first information. Depending on the context, for example, the word "if" used herein may be interpreted as "at" or "when" or "in response to".

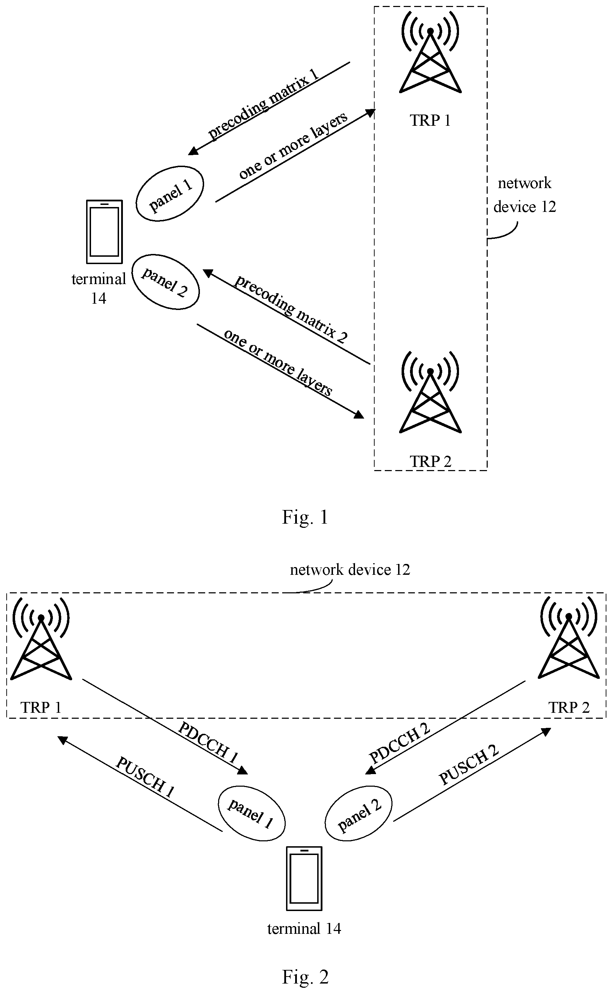

Fig. 1 shows a schematic diagram of a communication system provided by an example embodiment of the present disclosure. The communication system may include a network device 12 and a terminal 14. The network device 12 includes TRP1 and TRP2.

The network device 12 may be a base station, which is a device that provides wireless communication functions for the terminal 14. The base station may include various forms of macro base stations, micro base stations, relay stations, access points, etc. In systems using different wireless access technologies, the names of devices with base station functions may be different. For example, in the Long Term Evolution (LTE) system, it is called an evolved base station (eNodeB, eNB); and in the 5G NR system, it is called a next-generation base station (gNodeB, gNB). With the evolution of communication technology, the description of "base station" may change. For the convenience of description in the embodiments of the present disclosure, the above-mentioned devices that provide wireless communication functions for the terminal 14 are collectively referred to as network devices 12.

The terminal 14 may include various handheld devices, vehicle-mounted devices, wearable devices, computing devices, or other processing devices connected to a wireless modem with wireless communication functions, as well as various forms of user devices, Mobile Station (MS), terminal devices, etc. For the convenience of description, the above-mentioned devices are collectively referred to as terminals.

For example, there are two communication scenarios between the network device 12 and the terminal 14: uplink communication scenarios and downlink communication scenarios. The uplink communication refers to the terminal 14 sending signals to the network device 12. The downlink communication refers to the network device 12 sending signals to the terminal 14.

The uplink PUSCH transmission is sent towards the direction of TRPs of multiple base stations. In the R17 version of the Third Generation Partnership Project (3GPP), the cooperative transmission in the Time Division Multiplexing (TDM) transmission mode is mainly standardized. The same information is sent on PUSCH in a multiplexing way to different TRPs of the base station in different Transmission Occasions (TO) in time domain. This approach has relatively low requirements on the terminal capability, does not require the ability to support simultaneous beam transmission, and has a large transmission delay.

For uplink, the PUSCH channels facing different TRPs may actually pass through channels with very different spatial characteristics. Therefore, it is believed that the spatial reception parameters of the PUSCH channels in different transmission directions are different.

In the enhanced goal of R18, it is mainly hoped that the multiple antenna panels of the terminal can realize simultaneous cooperative transmission towards the direction of multiple TRPs to increase the reliability and throughput of the transmission. At the same time, the transmission delay under multiple TRPs can be effectively reduced, but the terminal is required to have the ability to send multiple beams simultaneously. The transmission of PUSCH may be based on a single Physical Downlink Control Channel (PDCCH), that is, a Single Downlink Control Information (S-DCI) scheduled transmission from multiple antenna panels to multiple TRPs.

As shown in Fig. 1, a DCI directly schedules or indirectly schedules precoding matrix 1 and precoding matrix 2 to the terminal. The terminal 14 uses the antenna panel 1 based on the precoding matrix 1 to send one or more layers of uplink data to TRP1. The terminal 14 uses the antenna panel 2 based on the precoding matrix 2 to send one or more layers of uplink data to TRP2.

The transmission of PUSCH may also be based on different PDCCHs, that is, Multi-Downlink Control Information (M-DCI) scheduled transmission from multiple antenna panels to multiple TRPs, as shown in Fig. 2.

TRP 1 sends the first DCI to the terminal 14 via PDCCH 1, and schedules the terminal 14 to send PUSCH 1 to TRP 1 using the antenna panel 1. TRP 2 sends the second DCI to the terminal 14 via PDCCH 2, and schedules the terminal 14 to send PUSCH 2 to TRP 2 using the antenna panel 2.

The above TRP1 and TRP2 are two TRPs in the same cell.

In the STxMP scenario, the uplink transmission process includes codebook-based uplink transmission and non-codebook-based uplink transmission.

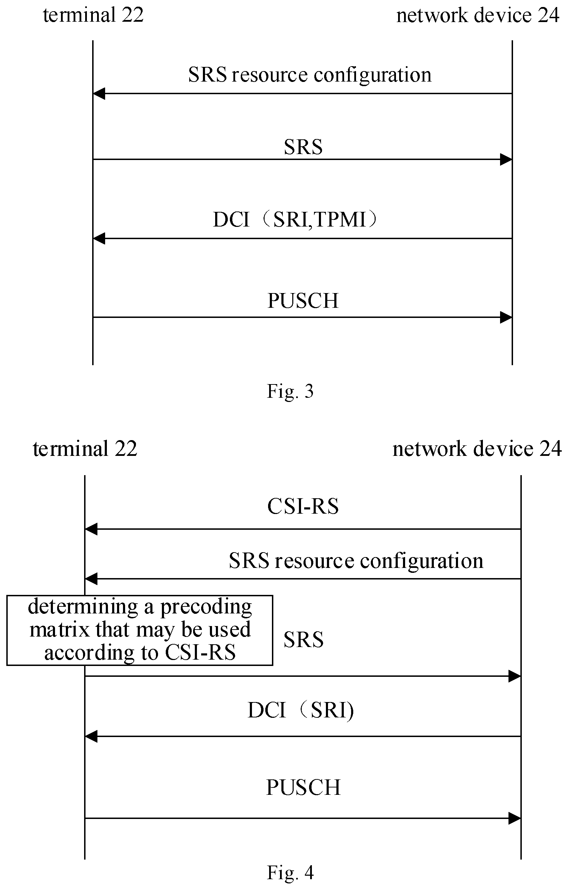

Fig. 3 shows a schematic diagram of a codebook-based uplink PUSCH transmission provided by an example embodiment of the present disclosure, which includes the terminal 22 and the network device 24.

In the codebook-based uplink transmission process, the network device 24 first sends a Sounding Reference Signal (SRS) resource configuration to the terminal 22. The SRS resource configuration includes at least one SRS resource set and the relevant configuration of each SRS resource. Then, the terminal 22 sends at least one SRS to the network device 24 based on the SRS resource configuration. The network device 24 acquires the channel condition of each uplink channel based on the received at least one SRS, and then provides DCI to the terminal 22. The DCI at least includes SRI and TPMI. Finally, the terminal 22 sends PUSCH to the network device 24 based on TPMI and SRI.

Fig. 4 shows a schematic diagram of a non-codebook-based uplink transmission process provided by an example embodiment of the present disclosure, which includes the terminal 22 and the network device 24.

In the non-codebook-based uplink transmission process, the precoding matrix is no longer limited to a fixed candidate set. The network device 24 first sends a Channel State Information-Reference Symbol (CSI-RS) and SRS resource configuration information to the terminal 22. The SRS resource configuration includes at least one SRS resource set and the relevant configuration of each SRS resource. Then, the terminal 22 calculates at least one precoding matrix that may be used on its own based on the measurement result of CSI-RS by singular value decomposition and other algorithms. After that, the terminal 22 sends at least one SRS to the network device 24 based on the SRS resource configuration. The network device 24 acquires the channel condition of each uplink channel based on the received at least one SRS, and then provides DCI to the terminal 22. The DCI at least includes SRI. Finally, the terminal 22 determines the precoding matrix used for the current time based on SRI from the precoding matrices that may be used, and sends PUSCH to the network device 24 based on SRI and the precoding matrix used for the current time.

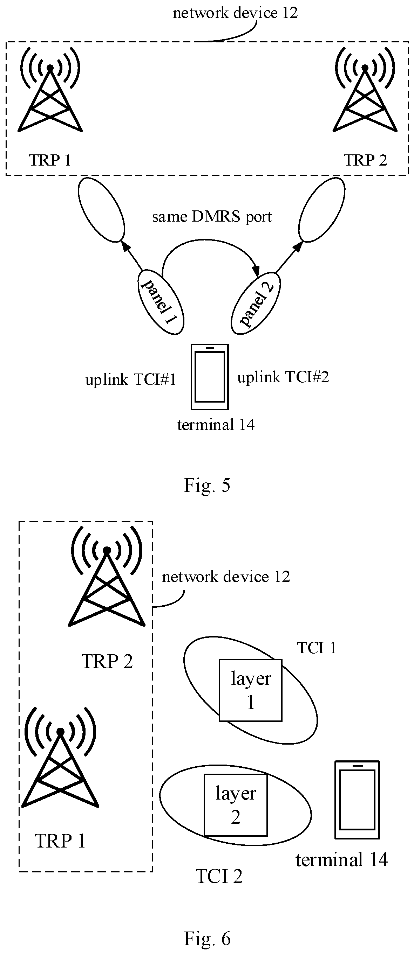

Fig. 5 shows a schematic diagram of an SFN transmission multiplexing mode provided by an example embodiment of the present disclosure, which includes the network device 12 and the terminal 14.

In the SFN transmission multiplexing mode, a TB of PUSCH is sent on the same time-frequency resource to two different TRPs respectively through the same DMRS port or port combination allocated on different panels, where different panels/TRPs/TOs are associated with different TCI states (*i.e.,* beams) respectively.

The terminal 14 uses the SFN transmission mode, that is, simultaneously sends TBs to multiple TRPs of the network device 12. This increases the probability that the network device 12 receives data, so as to achieve reliable uplink transmission.

For the SFN transmission mode, both uplink waveforms of Cyclic Prefix-Orthogonal Frequency Division Multiplexing (CP-OFDM) and Discrete Fourier Transform-Spread-Orthogonal Frequency Division Multiplexing (DFT-S-OFDM) can be supported.

The CP-OFDM waveform is used for uplink and downlink of the physical layer in the NR system, which is suitable for high-throughput scenarios. With the Multiple Input Multiple Output (MIMO) transmission mode used to provide high spectral packing efficiency in the Resource Block (RB), the use of network capacity in dense cities can be maximized. The DFT-S-OFDM waveform is used for uplink of the physical layer in the NR system, which is suitable for power-limited scenarios. The single-layer transmission mode is more conducive to cell coverage and more suitable for the user transmission at cell edge, because the Peak to Average Power Ratio (PAPR) of the DFT-S-OFDM waveform is lower than that of CP-OFDM.

Fig. 6 shows a schematic diagram of a transmission multiplexing mode provided by an example embodiment of the present disclosure, which includes the network device 12 and the terminal 14.

In the Space Division Multiplexing (SDM) transmission multiplexing mode, a TB of PUSCH is sent on the same time-frequency resource to two different TRPs respectively through the corresponding Demodulation Reference Signal (DMRS) port or port combination allocated on different panels, where different panels/TRPs/TOs are associated with different TCI states (*i.e*., beams) respectively.

For example, there may be two types of SDM: SDM-A and SDM-B.

SDM-A: different parts of a TB of PUSCH are sent on the same time-frequency resource to two different TRPs respectively through the corresponding DMRS port or port combination allocated on different panels, where different panels/TRPs/TOs are associated with different TCI states (*i.e.,* beams).

SDM-B: the repetition of the same TB corresponding to different Redundancy Versions (RVs) of PUSCH is sent on the same time-frequency resource to two different TRPs respecrtively through the corresponding DMRS port or port combination allocated on different panels, where different panels/TRPs/TOs are associated with different TCI states (*i.e.,* beams) respectively.

According to the above Figs. 3 and 4, the network device needs to send the SRS resource configuration to the terminal in advance. In the STxMP scenario, there may be two configuration modes: a first SRS resource configuration mode and a second SRS resource configuration mode.

In the first SRS resource configuration mode, the network device configures the configuration of two SRS resource sets to the terminal, where the two SRS resource sets include a first SRS resource set and a second SRS resource set, and different SRS resource sets are associated with different antenna panel information.

The two SRS resource sets are both used for either codebooks or non-codebooks.

For example, the different antenna panel information includes at least one of the following information:
- different antenna panels, where the number of antenna panels may be 2 or 4, and the default maximum number in the embodiments of the present application is 2;
- different TRPs;
- different TCI states; or
- different TOs.

In some embodiments, the first SRS resource set is associated with the first antenna panel of the terminal, and the second SRS resource set is associated with the second antenna panel of the terminal.

In some embodiments, the first SRS resource set is associated with the first TRP of the network device, and the first TRP sends DCI to the first antenna panel; and the second SRS resource set is associated with the second TRP of the network device, and the second TRP sends DCI to the second antenna panel.

In some embodiments, the first SRS resource set is associated with the first TCI state of the terminal, and the first TCI state indicates the beam sent to the first TRP; and the second SRS resource set is associated with the second TCI state of the terminal, and the second TCI state indicates the beam sent to the second TRP.

In some embodiments, the first SRS resource set is associated with the first TO of the terminal, and the first TO is used to send SRS to the first TRP; and the second SRS resource set is associated with the second TO of the terminal, and the second TO is used to send SRS to the second TRP.

In the second SRS resource configuration mode, the network device configures the configuration of an SRS resource set to the terminal, where the SRS resource set includes a first SRS resource subset and a second SRS resource subset, and different SRS resource subsets are associated with different antenna panel information.

The SRS resource set is used for codebook or non-codebook.

For example, the different antenna panel information includes at least one of the following information:
- different antenna panels, where the number of antenna panels may be 2 or 4, and the default maximum number in the embodiments of the present application is 2;
- different TRPs;
- different TCI states; or
- different TOs.

In some embodiments, the first SRS resource subset is associated with the first antenna panel of the terminal, and the second SRS resource subset is associated with the second antenna panel of the terminal.

In some embodiments, the first SRS resource subset is associated with the first TRP of the network device, and the first TRP sends DCI to the first antenna panel; and the second SRS resource subset is associated with the second TRP of the network device, and the second TRP sends DCI to the second antenna panel.

In some embodiments, the first SRS resource subset is associated with the first TCI state of the terminal, and the first TCI state indicates the beam sent to the first TRP; and the second SRS resource subset is associated with the second TCI state of the terminal, and the second TCI state indicates the beam sent to the second TRP.

In some embodiments, the first SRS resource subset is associated with the first TO of the terminal, and the first TO is used to send SRS to the first TRP; and the second SRS resource subset is associated with the second TO of the terminal, and the second TO is used to send SRS to the second TRP.

For the two SRS resource configuration modes as above, redesigning is also required for the SRS resource set indication fields in the DCI, so that in the STxMP scenario, the network device can indicate to the terminal the SRS resource set and SRI/TPMI field that need to be associated in the single-TRP (s-TRP) or multi-TRP (m-TRP) scenario.

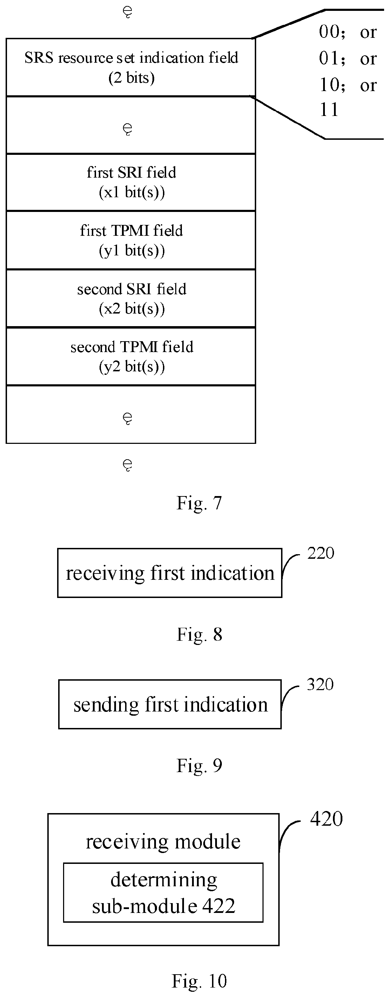

Fig. 7 shows a schematic diagram of the DCI information fields provided by an example embodiment of the present disclosure. In conjunction with reference to Fig. 7, the DCI includes multiple information fields, and the fields related to the present application in the multiple information fields include: SRS resource set indication field (2 bits), the first SRI field (x1 bit(s)), the second SRI field (x2 bit(s)), the first TPMI field (y1 bit(s)), and the second TPMI field (y2 bit(s)). For the non-codebook case, the SRS resource set indication field and two SRI fields are used. For the codebook case, the SRS resource set indication field, two SRI fields, and two TPMI fields are used. x1, x2, y1 and y2 are variable values.

In the current R17 protocol, for the cooperative transmission (non-simultaneous transmission) in the TDM transmission mode, the meaning of each code point in the SRS resource set indication field is designed as shown in Table 1 below:

**Table 1**

| code point | SRS resource set | SRI (for non-codebook and codebook) / TPMI (codebook only) field |
|---|---|---|
| 00 | s-TRP mode and associating first SRS resource set (TRP1) | first SRI/TPMI field (second SRI/TPMI field being not used) |
| 01 | s-TRP mode and associating second SRS resource set (TRP2) | first SRI/TPMI field (second SRI/TPMI field being not used) |
| 10 | m-TRP mode associating (first SRS resource set, second SRS resource set) | using first SRI/TPMI field and second SRI/TPMI field at the same time |
| 11 | m-TRP mode associating (second SRS resource set, first SRS resource set) | using first SRI/TPMI field and second SRI/TPMI field at the same time |

The meaning of each code point in Table 1 is as follows.

When the code point of the SRS resource set indication field is 00, it indicates that the terminal uses the s-TRP mode to transmit PUSCH to TRP1, associating the first SRS resource set. In the codebook-based transmission mode, the first SRI/TPMI field in the DCI is used to acquire the SRI and TPMI used for the current transmission. In the non-codebook-based transmission mode, the first SRI/TPMI field in the DCI is used to acquire the SRI used for the current transmission. At this time, the second SRI/TPMI field is not used.

When the code point of the SRS resource set indication field is 01, it indicates that the terminal uses the s-TRP mode to transmit PUSCH to TRP2, associating the second SRS resource set. In the codebook-based transmission mode, the first SRI/TPMI field in the DCI is used to acquire the SRI and TPMI used for the current transmission. In the non-codebook-based transmission mode, the first SRI/TPMI field in the DCI is used to acquire the SRI used for the current transmission. At this time, the second SRI/TPMI field is not used.

When the code point of the SRS resource set indication field is 10, it indicates that the terminal uses the m-TRP mode to first transmit PUSCH to TRP 1 in the first TO, associating the first SRS resource set; and then transmit PUSCH to TRP2 in the second TO, associating the second SRS resource set. In the codebook-based transmission mode, the first SRI/TPMI field in the DCI is used to acquire the SRI and TPMI used for transmission to TRP1, and the second SRI/TPMI field in the DCI is used to acquire the SRI and TPMI used for transmission to TRP2. In the non-codebook-based transmission mode, the first SRI/TPMI field in the DCI is used to acquire the SRI used for transmission to TRP1, and the second SRI/TPMI field in the DCI is used to acquire the SRI used for transmission to TRP2.

When the code point of the SRS resource set indication field is 11, it indicates that the terminal uses the m-TRP mode to first transmit PUSCH to TRP2 in the first TO, associating the second SRS resource set; and then transmit PUSCH to TRP1 in the second TO, associating the first SRS resource set. In the codebook-based transmission mode, the second SRI/TPMI field in the DCI is used to acquire the SRI and TPMI used for transmission to TRP2, and the first SRI/TPMI field in the DCI is used to acquire the SRI and TPMI used for transmission to TRP1. In the non-codebook-based transmission mode, the second SRI/TPMI field in the DCI is used to acquire the SRI used for transmission to TRP2, and the first SRI/TPMI field in the DCI is used to acquire the SRI used for transmission to TRP1.

From the analysis of Table 1, it can be seen that the code point 10 is designed for the TDM coordination mode where PUSCH is sent to TRP1 first and then to TRP2, and code point 11 is designed for the TDM coordination mode where PUSCH is sent to TRP2 first and then to TRP1. In the STxMP scenario, the terminal needs to send PUSCH to TRP1 and TRP2 at the same time. At this time, the code points 10 and 11 in Table 1 will lose their indication meanings and become redundant code points.

Fig. 8 shows a flow chart of a method for indicating a transmission multiplexing mode provided by an example embodiment of the present disclosure, which is applied to a terminal of the communication system shown in Fig. 1, and includes:
step 220, receiving a first indication.

For example, the terminal receives a first indication sent by a network device. The first indication indicates the transmission multiplexing mode applied when the terminal is scheduled to perform a multi-panel simultaneous transmission from multiple panels to multiple TRPs.

For example, the multi-panel simultaneous transmission is the STxMP transmission mode.

For example, the transmission multiplexing mode includes at least one of the following: Single-Frequency Network (SFN); or Space Division Multiplexing (SDM).

That is, the first indication indicates that the terminal uses the SFN or SDM transmission mode for transmission during the uplink STxMP transmission process.

In some embodiments, the first information is carried in a Radio Resource Control (RRC) signaling. In some embodiments, the first information is carried in a Medium Access Control Control Element (MAC CE) signaling. In some embodiments, the first indication is carried in an SRS resource set indication field. In some embodiments, the first indication is carried in an antenna port indication field (Antenna Ports) in DCI. In some embodiments, the first indication is carried in a newly-added indication field of a DCI.

### Method 1: the first indication is carried in the signaling.

For example, the first indication is carried in at least one of the following signalings: RRC; or MAC CE.

That is, the terminal receives an RRC signaling sent by a network device, the RRC signaling carries the first information, and the first information indicates that the terminal uses the SFN mode or the SDM mode to perform STxMP.

Alternatively, the terminal receives a MAC CE sent by a network device, the MAC CE carries the first information, and the first information indicates that the terminal uses the SFN mode or the SDM mode to perform STxMP.

### Method 2: the first information is carried in the SRS resource set indication field.

From the above introduction to Table 1, it can be seen that in the STxMP scenario, since the terminal needs to send PUSCH to TRP1 and TRP2 at the same time, the code points 10 and 11 in Table 1 do not need to be used. Thus, the redundant code points 10 and 11 can indicate the transmission multiplexing mode for the terminal.

For example, when the value of the first indication is the first code point, the first code point indicates that the transmission multiplexing mode is SDM. When the value of the first indication field is the second code point, the second code point indicates that the transmission multiplexing mode is SFN.

For example, the first code point is 10 and the second code point is 11. Alternatively, the first code point is 11 and the second code point is 10.

That is, in one case, when the code point corresponding to the first indication is 10, the transmission multiplexing mode is indicated as SDM; and when the code point corresponding to the first indication is 11, the transmission multiplexing mode is indicated as SFN. In another case, when the code point corresponding to the first indication is 10, the transmission multiplexing mode is indicated as SFN; and when the code point corresponding to the first indication is 11, the transmission multiplexing mode is indicated as SDM.

In an implementation, taking the first code point of 10 and the second code point of 11 as an example, implementations of some code points of the SRS resource set indication field in this embodiment are shown as in Table 2:

**Table 2**

| code point | SRI field (codebook-based or non-codebook-based transmission) / TPMI field (codebook-based transmission) |
|---|---|
| 10 | indicating that the transmission multiplexing mode is SDM |
| 11 | indicating that the transmission multiplexing mode is SFN |

### Method 3: the first information is carried in the antenna port indication field (Antenna Ports) (determined according to the number of CDM groups).

For example, when the DMRS port indicated by the antenna port indication field corresponds to one Code Division Multiplexing group, the first indication indicates that the transmission multiplexing mode is SFN. When the DMRS port indicated by the antenna port indication field corresponds to at least two Code Division Multiplexing groups, the first indication indicates that the transmission multiplexing mode is SDM.

That is, the DMRS port/port group is determined according to the value of the antenna port indication field, and then the DMRS port configuration pre-configured by RRC is used to determine whether the DMRS port/port group belongs to the same CDM group or to multiple different CDM groups. When the aforementioned DMRS port/port group belongs to the same CDM group, the transmission multiplexing mode indicated is SFN. When the aforementioned DMRS port/port group belongs to multiple CDM groups, the transmission multiplexing mode indicated is SDM.

That is, in the SDM scheme, the DMRS ports sent by PUSCH through different panels/TRPs/Transmission Configuration Indicators (TCIs) correspond to different CDM groups. Therefore, by limiting the DMRS port group used by SFN to correspond to the same CDM group, it can be distinguished whether the indication is SDM or SFN.

For example, when the rank (RANK) is equal to 2, the DMRS ports {0,2} corresponding to the SDM scheme belong to 2 CDM groups respectively. While in the SFN scheme, the DMRS ports {0,1} belonging to the same CDM group may be used for the rank-2 transmission.

### Method 4: the first information is carried in the antenna port indication field (Antenna Ports) (determined according to the DMRS port indication table).

For example, the transmission multiplexing mode is determined by querying the DMRS port indication table according to the first indication, and the entries in the DMRS port indication table correspond to SDM or SFN respectively.

That is, after acquiring the value of the antenna port indication field, the terminal determines the entry corresponding to the value in the DMRS port indication table by querying the DMRS port indication table. Since the entries in the DMRS port indication table correspond to the SDM or SFN transmission multiplexing mode respectively, the transmission multiplexing mode corresponding to this entry is the transmission multiplexing mode indicated by the first information.

Table 3 shows an example of the DMRS port indication table. The parameter configuration is DMRS type 2, single symbol, three-stream transmission (rank of 3).

**Table 3**

| Value | Number of DMRS CDM group(s) without data (CMD group(s) that cannot be multiplexed) | DMRS port(s) |
|---|---|---|
| 0 | 2 | 0-2 |
| 1 | 3 | 0-2 |
| 2 | 3 | 3-5 |
| 3 | 2 | 0-2 |
| 4 | 3 | 0-2 |
| 5 | 3 | 3-5 |
| 6-15 | Reserved | Reserved |

In an implementation, the number of predefined entries in the DMRS port indication table is increased to acquire the DMRS port indication table shown in Table 3. The transmission multiplexing modes corresponding to the first to third rows are the SDM mode, and the transmission multiplexing modes corresponding to the fourth to sixth rows are the SFN mode. For example, when the value in the antenna port indication field is 0, the indicated transmission multiplexing mode is determined to be SDM by querying the table. For another example, when the value in the antenna port indication field is 3, the indicated transmission multiplexing mode is determined to be SFN by querying the table.

For example, based on Table 3, a new column may be added to additionally indicate the transmission multiplexing modes corresponding to different entries, as shown in Table 4. The rightmost column in Table 4 is the newly-added column.

**Table 4**

| Value | Number of DMRS CDM group(s) without data (CMD group(s) that cannot be multiplexed) | DMRS port(s) | Additional Indication |
|---|---|---|---|
| 0 | 2 | 0-2 | SDM |
| 1 | 3 | 0-2 | SDM |
| 2 | 3 | 3-5 | SDM |
| 3 | 2 | 0-2 | SFN |
| 4 | 3 | 0-2 | SFN |
| 5 | 3 | 3-5 | SFN |
| 6-15 | Reserved | Reserved | |

Taking Table 4 as an example, when the value in the antenna port indication field is 1, the indicated transmission multiplexing mode is determined to be SDM by querying the table. For another example, when the value in the antenna port indication field is 5, the indicated transmission multiplexing mode is determined to be SFN by querying the table.

### Method 5: the first information is carried in the newly-added indication field in DCI.

In some embodiments, the newly-added indication field occupies 1 bit. That is, 1 bit is added to DCI to indicate the transmission multiplexing mode applied when the terminal performs STxMP.

In some embodiments, when the first indication is of the first value, the first value indicates that the transmission multiplexing mode is SDM. When the first indication is of the second value, the second value indicates that the transmission multiplexing mode is SFN.

For example, the first value is 0 and the second value is 1. Alternatively, the first value is 1 and the second value is 0.

That is, in one implementation, when the value corresponding to the first indication is 0, the transmission multiplexing mode is is indicated to be SDM; and when the value corresponding to the first indication is 1, the transmission multiplexing mode is indicated to be SFN. In another implementation, when the value corresponding to the first indication is 1, the transmission multiplexing mode is indicated to be SFN; and when the value corresponding to the first indication is 0, the transmission multiplexing mode is indicated to be SDM.

In one implementation, taking the first value of 0 and the second value of 1 as an example, the implementation of the newly-added indication field in this embodiment is shown as in Table 5:

**Table 5**

| value of newly-added indication field | transmission multiplexing mode |
|---|---|
| 0 | SDM |
| 1 | SFN |

It should be noted that each of the above methods may be a separate embodiment or combined into an embodiment. In some embodiments, the first information is carried in RRC signaling. In some embodiments, the first information is carried in MAC CE. In some embodiments, the first indication is carried in the SRS resource set indication field. In some embodiments, the first indication is carried in the antenna port indication field (Antenna Ports) in DCI. In some embodiments, the first indication is carried in the newly-added indication field of DCI. The present disclosure is not limited in this regard.

In summary, according to the method(s) provided by the embodiments of the present disclosure, in the case where the terminal is scheduled to use uplink transmission from multiple panels to multiple TRPs in the STxMP scenario, a first indication is received for indicating a transmission multiplexing mode, so that the terminal can flexibly switch between different transmission multiplexing modes.

Fig. 9 shows a flow chart of a method for indicating a transmission multiplexing mode provided by an example embodiment of the present disclosure, which is applied to a network device of the communication system shown in Fig. 1. The method includes:
step 320, sending a first indication.

For example, the network device sends a first indication to the terminal. The first indication indicates the transmission multiplexing mode applied when the terminal is scheduled to perform a multi-panel simultaneous transmission from multiple panels to multiple TRPs.

For example, the multi-panel simultaneous transmission is the STxMP transmission mode.

For example, the transmission multiplexing mode includes at least one of the following: Single-Frequency Network (SFN); or Space Division Multiplexing (SDM).

That is, the first indication indicates that the terminal uses the SFN or SDM transmission mode for transmission during the uplink STxMP transmission process.

In some embodiments, the first information is carried in the Radio Resource Control (RRC) signaling. In some embodiments, the first information is carried in the Medium Access Control Control Element (MAC CE) signaling. In some embodiments, the first indication is carried in the SRS resource set indication field. In some embodiments, the first indication is carried in the antenna port indication field (Antenna Ports) in DCI. In some embodiments, the first indication is carried in the newly-added indication field of DCI.

### Method 1: the first indication is carried in the signaling.

For example, the first indication is carried in at least one of the following signalings: RRC; or MAC CE.

That is, the network device sends an RRC signaling to the terminal. The RRC signaling carries the first information. The first information indicates that the terminal applies the SFN transmission multiplexing mode or the SDM transmission multiplexing mode for STxMP.

Alternatively, the network device sends a MAC CE to the terminal. The MAC CE carries the first information. The first information indicates that the terminal applies the SFN transmission multiplexing mode or the SDM transmission multiplexing mode for STxMP.

### Method 2: the first information is carried in the SRS resource set indication field.

From the above introduction to Table 1, it can be seen that in the STxMP scenario, since the terminal needs to send PUSCH to TRP1 and TRP2 at the same time, there is no need to use the code point 10 and the code point 11 in Table 1. Thus, the redundant code points 10 and 11 may indicate the transmission multiplexing mode for the terminal.

For example, when the value of the first indication is the first code point, the first code point indicates that the transmission multiplexing mode is SDM; and when the value of the first indication field is the second code point, the second code point indicates that the transmission multiplexing mode is SFN.

For example, the first code point is 10 and the second code point is 11. Alternatively, the first code point is 11 and the second code point is 10.

That is, in one case, when the code point corresponding to the first indication is 10, the transmission multiplexing mode is indicated as SDM; and when the code point corresponding to the first indication is 11, the transmission multiplexing mode is indicated as SFN. In another case, when the code point corresponding to the first indication is 10, the transmission multiplexing mode is indicated as SFN; and when the code point corresponding to the first indication is 11, the transmission multiplexing mode is indicated as SDM.

In one implementation, taking the first code point of 10 and the second code point of 11 as an example, the implementation for some code points of the SRS resource set indication field in this embodiment is shown as in Table 6:

**Table 6**

| code point | SRI field (codebook-based or non-codebook-based) / TPMI field (codebook-based transmission) |
|---|---|
| 10 | indicating that the transmission multiplexing mode is SDM |
| 11 | indicating that the transmission multiplexing mode is SFN |

### Method 3: the first information is carried in the antenna port indication field (Antenna Ports) (determined according to the number of CDM groups).

For example, when the DMRS port indicated by the antenna port indication field corresponds to one Code Division Multiplexing group, the first indication indicates that the transmission multiplexing mode is SFN. When the DMRS port indicated by the antenna port indication field corresponds to at least two Code Division Multiplexing groups, the first indication indicates that the transmission multiplexing mode is SDM.

That is, the DMRS port/port group is determined according to the value of the antenna port indication field, and then the DMRS port configuration pre-configured by RRC is used to determine whether the DMRS port/port group belongs to the same CDM group or to multiple different CDM groups. When the aforementioned DMRS port/port group belongs to the same CDM group, the transmission multiplexing mode indicated is SFN. When the aforementioned DMRS port/port group belongs to multiple CDM groups, the transmission multiplexing mode indicated is SDM.

That is, in the SDM scheme, the DMRS ports sent by PUSCH through different panels/TRPs/Transmission Configuration Indicators (TCIs) correspond to different CDM groups. Therefore, by limiting the DMRS port group used by SFN to correspond to the same CDM group, it can be distinguished whether the indication is SDM or SFN.

For example, when the rank (RANK) is equal to 2, the DMRS ports {0,2} corresponding to the SDM scheme belong to 2 CDM groups respectively. While in the SFN scheme, the DMRS ports {0,1} belonging to the same CDM group may be used for the rank-2 transmission.

### Method 4: the first information is carried in the antenna port indication field (Antenna Ports) (determined according to the DMRS port indication table).

For example, the value of the first indication is associated with SDM or SFN.

That is, in the DMRS port indication table, the value of the antenna port indication field is associated with SDM or SFN. Therefore, according to the DMRS port indication table, the corresponding transmission multiplexing mode can be determined as SDM or SFN based on the value of the first indication.

That is, since the entries in the DMRS port indication table correspond to SDM or SFN respectively, the terminal can query the DMRS port indication table according to the first indication to determine whether the transmission multiplexing mode is SDM or SFN.

That is, after acquiring the value of the antenna port indication field, the terminal determines the entry corresponding to the value in the DMRS port indication table by querying the DMRS port indication table. Since the entries in the DMRS port indication table correspond to the SDM or SFN transmission multiplexing mode respectively, the transmission multiplexing mode corresponding to this entry is the transmission multiplexing mode indicated by the first information.

Table 7 shows an example of the DMRS port indication table. The parameter configuration is DMRS type 2, single symbol, three-stream transmission (rank of 3).

**Table 7**

| Value | Number of DMRS CDM group(s) without data (CMD group(s) that cannot be multiplexed) | DMRS port(s) |
|---|---|---|
| 0 | 2 | 0-2 |
| 1 | 3 | 0-2 |
| 2 | 3 | 3-5 |
| 3 | 2 | 0-2 |
| 4 | 3 | 0-2 |
| 5 | 3 | 3-5 |
| 6-15 | Reserved | Reserved |

In an implementation, the number of predefined entries in the DMRS port indication table is increased to acquire the DMRS port indication table shown in Table 7. The transmission multiplexing modes corresponding to the first to third rows are the SDM mode, and the transmission multiplexing modes corresponding to the fourth to sixth rows are the SFN mode. For example, when the value in the antenna port indication field is 0, the indicated transmission multiplexing mode is determined to be SDM by querying the table. For another example, when the value in the antenna port indication field is 3, the indicated transmission multiplexing mode is determined to be SFN by querying the table.

For example, based on Table 7, a new column may be added to additionally indicate the transmission multiplexing modes corresponding to different entries, as shown in Table 8. The rightmost column in Table 8 is the newly-added column.

**Table 8**

| Value | Number of DMRS CDM group(s) without data (CMD group(s) that cannot be multiplexed) | DMRS port(s) | Additional Indication |
|---|---|---|---|
| 0 | 2 | 0-2 | SDM |
| 1 | 3 | 0-2 | SDM |
| 2 | 3 | 3-5 | SDM |
| 3 | 2 | 0-2 | SFN |
| 4 | 3 | 0-2 | SFN |
| 5 | 3 | 3-5 | SFN |
| 6-15 | Reserved | Reserved | |

Taking Table 8 as an example, when the value in the antenna port indication field is 1, the indicated transmission multiplexing mode is determined to be SDM by querying the table. For another example, when the value in the antenna port indication field is 5, the indicated transmission multiplexing mode is determined to be SFN by querying the table.

### Method 5: the first information is carried in the newly-added indication field in DCI.

In some embodiments, the newly-added indication field occupies 1 bit. That is, 1 bit is added to DCI to indicate the transmission multiplexing mode applied when the terminal performs STxMP.

In some embodiments, when the first indication is of the first value, the first value indicates that the transmission multiplexing mode is SDM; and when the first indication is of the second value, the second value indicates that the transmission multiplexing mode is SFN.

For example, the first value is 0 and the second value is 1. Alternatively, the first value is 1 and the second value is 0.

That is, in one implementation, when the value corresponding to the first indication is 0, the transmission multiplexing mode is indicated as SDM; and when the value corresponding to the first indication is 1, the transmission multiplexing mode is indicated as SFN. In another implementation, when the value corresponding to the first indication is 1, the transmission multiplexing mode is indicated as SFN; and when the value corresponding to the first indication is 0, the transmission multiplexing mode is indicated as SDM.

In one implementation, taking the first value of 0 and the second value of 1 as an example, the implementation for the newly-added indication field in this embodiment is shown as in Table 9:

**Table 9**

| value of newly-added indication field | transmission multiplexing mode |
|---|---|
| 0 | SDM |
| 1 | SFN |

It should be noted that the above methods may be a separate embodiment or combined into an embodiment. In some embodiments, the first information is carried in RRC signaling. In some embodiments, the first information is carried in MAC CE. In some embodiments, the first indication is carried in the SRS resource set indication field. In some embodiments, the first indication is carried in the antenna port indication field (Antenna Ports) in DCI. In some embodiments, the first indication is carried in the newly-added indication field of DCI. The present disclosure is not limited in this regard.

In summary, according to the method(s) provided by the embodiments of the present disclosure, when the terminal is scheduled to use uplink transmission from multiple panels to multiple TRPs in the STxMP scenario, a first indication is sent to the terminal for indicating the transmission multiplexing mode. This helps to solve the problem of how to indicate the SFN scheme in the uplink multi-panel simultaneous transmission, so that the terminal can flexibly switch between different transmission multiplexing modes.

Fig. 10 shows a block diagram of an apparatus for indicating a transmission multiplexing mode provided by an example embodiment of the present disclosure. The apparatus includes:
a receiving module 420, configured to receive a first indication, where the first indication indicates the transmission multiplexing mode applied when the terminal is scheduled to perform a multi-panel simultaneous transmission from multiple panels to multiple Transmission and Reception Points (TRPs).

In an implementation of this embodiment, the transmission multiplexing mode includes at least one of the following: Single-Frequency Network (SFN); or Space Division Multiplexing (SDM).

In an implementation of this embodiment, the first indication is carried in at least one of the following signalings: Radio Resource Control (RRC); or Media Access Control Control Element (MAC CE).

In an implementation of this embodiment, the first indication is carried in the antenna port indication field in DCI.

In an implementation of this embodiment, when the DMRS port indicated by the antenna port indication field corresponds to one Code Division Multiplexing (CDM) group, the first indication indicates that the transmission multiplexing mode is SFN. When the DMRS port indicated by the antenna port indication field corresponds to at least two CDM groups, the first indication indicates that the transmission multiplexing mode is SDM.

In an implementation of this embodiment, the first indication is carried in the Sounding Reference Signal (SRS) resource set indication field.

In an implementation of this embodiment, when the value of the first indication is a first code point, the first code point indicates that the transmission multiplexing mode is SDM. When the value of the first indication is a second code point, the second code point indicates that the transmission multiplexing mode is SFN.

In an implementation of this embodiment, the first code point is 10 and the second code point is 11. Alternatively, the first code point is 11 and the second code point is 10.

In an implementation of this embodiment, the apparatus includes a determining sub-module 422. The determining sub-module 422 is configured to query the DMRS port indication table according to the first indication to determine the transmission multiplexing mode. The entries in the DMRS port indication table correspond to SDM or SFN respectively.

In an implementation of this embodiment, the first indication is carried in the newly-added indication field of DCI.

In an implementation of this embodiment, the newly-added indication field occupies 1 bit.

In an implementation of this embodiment, when the first indication is of a first value, the first value indicates that the transmission multiplexing mode is SDM; and when the first indication is of a second value, the second value indicates that the transmission multiplexing mode is SFN.

In an implementation of this embodiment, the first value is 0 and the second value is 1. Alternatively, the first value is 1 and the second value is 0.

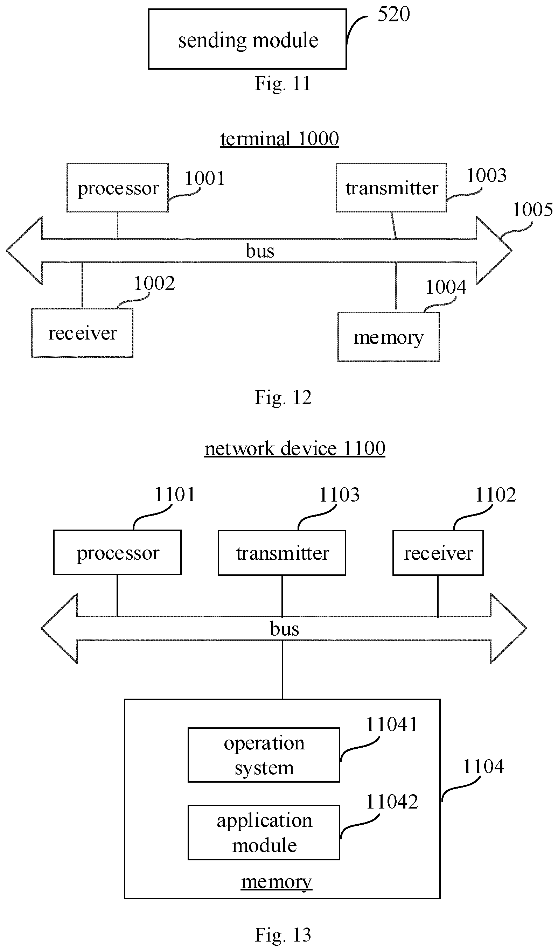

Fig. 11 shows a block diagram of an apparatus for indicating a transmission multiplexing mode provided by an example embodiment of the present disclosure, the apparatus including:
a sending module 520, configured to send a first indication, where the first indication indicates the transmission multiplexing mode applied when the terminal is scheduled to perform a multi-panel simultaneous transmission from multiple panels to multiple Transmission and Reception Points (TRPs).

In an implementation of this embodiment, the transmission multiplexing mode includes at least one of the following: Single-Frequency Network SFN; or Space Division Multiplexing (SDM).

In an implementation of this embodiment, the first indication is carried in at least one of the following signaling: Radio Resource Control (RRC); and Media Access Control Control Element (MAC CE).

In an implementation of this embodiment, the first indication is carried in the antenna port indication field in DCI.

In an implementation of this embodiment, when the DMRS port indicated by the antenna port indication field corresponds to one Code Division Multiplexing (CDM) group, the first indication indicates that the transmission multiplexing mode is SFN. When the DMRS port indicated by the antenna port indication field corresponds to at least two CDM groups, the first indication indicates that the transmission multiplexing mode is SDM.

In an implementation of this embodiment, the first indication is carried in the Sounding Reference Signal (SRS) resource set indication field.

In an implementation of this embodiment, when the value of the first indication is a first code point, the first code point indicates that the transmission multiplexing mode is SDM; and when the value of the first indication is a second code point, the second code point indicates that the transmission multiplexing mode is SFN.

In an implementation of this embodiment, the first code point is 10 and the second code point is 11. Alternatively, the first code point is 11 and the second code point is 10.

In an implementation of this embodiment, the value of the first indication is associated with SDM or SFN.

In an implementation of this embodiment, the first indication is carried in the newly-added indication field of DCI.

In an implementation of this embodiment, the newly-added indication field occupies 1 bit.

In an implementation of this embodiment, when the first indication is of a first value, the first value indicates that the transmission multiplexing mode is SDM; and when the first indication is of a second value, the second value indicates that the transmission multiplexing mode is SFN.

In an implementation of this embodiment, the first value is 0 and the second value is 1. Alternatively, the first value is 1 and the second value is 0.

Fig. 12 shows a schematic structural diagram of a terminal 1000 provided by an example embodiment of the present disclosure. The terminal including a processor 1001, a receiver 1002, a transmitter 1003, a memory 1004, and a bus 1005.

The processor 1001 includes one or more processing cores. The processor 1001 executes various functional applications and information processing by running software programs and modules.

The receiver 1002 and the transmitter 1003 may be implemented as a communication component, which may be a communication chip.

The memory 1004 is connected to the processor 1001 via the bus 1005.

The memory 1004 may be used to store at least one instruction. The processor 1001 is used to execute the at least one instruction to implement each step in the above method embodiment(s).

In addition, the memory 1004 may be implemented by any type of volatile or non-volatile storage device or a combination thereof. The volatile or non-volatile storage device includes, but is not limited to, a magnetic or optical disk, an Electrically Erasable Programmable Read Only Memory (EEPROM), an Erasable Programmable Read Only Memory (EPROM), a Static Random-Access Memory (SRAM), a Read Only Memory (ROM), a magnetic memory, a flash memory, and a Programmable Read Only Memory (PROM).

In an example embodiment, a non-transitory computer-readable storage medium including instructions is further provided, such as a memory including instructions. The instructions may be executed by a processor of a terminal to accomplish the above-mentioned method for indicating the transmission multiplexing mode. For example, the non-transitory computer-readable storage medium may be a ROM, a Random-Access Memory (RAM), a Compact Disc Read Only Memory (CD-ROM), a magnetic tape, a floppy disk, and an optical data storage device.

Fig. 13 is a block diagram of a network device 1100 according to an example embodiment. The network device 1100 may be a base station.

The network device 1100 may include a processor 1101, a receiver 1102, a transmitter 1103, and a memory 1104. The receiver 1102, the transmitter 1103, and the memory 1104 are respectively connected to the processor 1101 through a bus.

The processor 1101 includes one or more processing cores. The processor 1101 performs the method for indicating the transmission multiplexing mode provided by the embodiments of the present disclosure by running software programs and modules. The memory 1104 may be used to store software programs and modules. Specifically, the memory 1104 may store an operation system 11041 and an application module 11042 required for at least one function. The receiver 1102 is used to receive communication data sent by other devices. The transmitter 1103 is used to send communication data to other devices.

An example embodiment of the present disclosure further provides a computer-readable storage medium, in which at least one instruction, at least one program, a code set, or an instruction set is stored. The at least one instruction, the at least one program, the code set, or the instruction set is loaded and executed by a processor to implement the method for indicating the transmission multiplexing mode provided by the above-mentioned various method embodiments.

An example embodiment of the present disclosure further provides a computer program product, which includes computer instructions. The computer instructions are stored in a computer-readable storage medium. The processor of the computer device reads the computer instructions from the computer-readable storage medium, and the processor executes the computer instructions, so that the computer device performs the method for indicating the transmission multiplexing mode provided by the above-mentioned various method embodiments.

It should be understood that the word "multiple" mentioned in this document refers to two or more. After considering the specification and practicing the content disclosed herein, those skilled in the art will easily think of other embodiments of the present disclosure. The present disclosure is intended to cover any variation, use or adaptive change of the present disclosure, which follows the general principles of the present disclosure and includes common knowledge or conventional technical means in the technical field not disclosed in the present disclosure. The specification and embodiments are only regarded as examples, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A method for indicating a transmission multiplexing mode, wherein the method is performed by a terminal and comprises:
receiving first indication, wherein the first indication indicates the transmission multiplexing mode applied when the terminal is scheduled to perform a multi-panel simultaneous transmission from multiple panels to multiple Transmission and Reception Points (TRPs).

2. The method according to claim 1, wherein the transmission multiplexing mode comprises at least one of:
Single-Frequency Network (SFN); or
Space Division Multiplexing (SDM).

3. The method according to claim 2, wherein the first indication is carried in at least one of:
Radio Resource Control (RRC); or
Media Access Control Control Element (MAC CE).

4. The method according to claim 2, wherein
the first indication is carried in an antenna port indication field in Downlink Control Information (DCI).

5. The method according to claim 4, wherein
when a Demodulation Reference Signal (DMRS) port indicated by the antenna port indication field corresponds to one Code Division Multiplexing (CDM) group, the first indication indicates that the transmission multiplexing mode is SFN;
when the DMRS port indicated by the antenna port indication field corresponds to at least two CDM groups, the first indication indicates that the transmission multiplexing mode is SDM.

6. The method according to claim 2, wherein
the first indication is carried in a Sounding Reference Signal (SRS) resource set indication field.

7. The method according to claim 6, wherein
when a value of the first indication is a first code point, the first code point indicates that the transmission multiplexing mode is SDM;
when the value of the first indication is a second code point, the second code point indicates that the transmission multiplexing mode is SFN.

8. The method according to claim 7, wherein
the first code point is 10 and the second code point is 11; or
the first code point is 11 and the second code point is 10.

9. The method according to claim 4, further comprising:
determining the transmission multiplexing mode by querying a DMRS port indication table according to the first indication, wherein entries in the DMRS port indication table correspond to SDM or SFN respectively.

10. The method according to claim 2, wherein
the first indication is carried in a newly-added indication field of DCI.

11. The method according to claim 10, wherein
the newly-added indication field occupies 1 bit.

12. The method according to claim 11, wherein
when the first indication is of a first value, the first value indicates that the transmission multiplexing mode is SDM;
when the first indication is of a second value, the second value indicates that the transmission multiplexing mode is SFN.

13. The method according to claim 12, wherein
the first value is 0 and the second value is 1; or
the first value is 1 and the second value is 0.

14. A method for indicating a transmission multiplexing mode, wherein the method is performed by a network device and comprises:
sending first indication, wherein the first indication indicates the transmission multiplexing mode applied when a terminal is scheduled to perform a multi-panel simultaneous transmission from multiple panels to multiple Transmission and Reception Points (TRPs).

15. The method according to claim 14, wherein the transmission multiplexing mode comprises at least one of:
Single-Frequency Network (SFN); or
Space Division Multiplexing (SDM).

16. The method according to claim 15, wherein the first indication is carried in at least one of:
Radio Resource Control (RRC); or
Media Access Control Control Element (MAC CE).

17. The method according to claim 15, wherein
the first indication is carried in an antenna port indication field in DCI.

18. The method according to claim 17, wherein
when a DMRS port indicated by the antenna port indication field corresponds to one Code Division Multiplexing (CDM) group, the first indication indicates that the transmission multiplexing mode is SFN;
when the DMRS port indicated by the antenna port indication field corresponds to at least two CDM groups, the first indication indicates that the transmission multiplexing mode is SDM.

19. The method according to claim 15, wherein
the first indication is carried in a Sounding Reference Signal (SRS) resource set indication field.

20. The method according to claim 19, wherein
when a value of the first indication is a first code point, the first code point indicates that the transmission multiplexing mode is SDM;
when the value of the first indication is a second code point, the second code point indicates that the transmission multiplexing mode is SFN.

21. The method according to claim 20, wherein
the first code point is 10 and the second code point is 11; or
the first code point is 11 and the second code point is 10.

22. The method according to claim 17, wherein
a value of the first indication is associated with SDM or SFN.

23. The method according to claim 15, wherein
the first indication is carried in a newly-added indication field of DCI.

24. The method according to claim 23, wherein
the newly-added indication field occupies 1 bit.

25. The method according to claim 24, wherein
when the first indication is of a first value, the first value indicates that the transmission multiplexing mode is SDM;
when the first indication is of a second value, the second value indicates that the transmission multiplexing mode is SFN.

26. The method according to claim 25, wherein
the first value is 0 and the second value is 1; or
the first value is 1 and the second value is 0.

27. An apparatus for indicating a transmission multiplexing mode, comprising:
a receiving module, configured to receive first indication, wherein the first indication indicates the transmission multiplexing mode applied when a terminal is scheduled to perform a multi-panel simultaneous transmission from multiple panels to multiple Transmission and Reception Points (TRPs).

28. An apparatus for indicating a transmission multiplexing mode, comprising:
a sending module, configured to send first indication, wherein the first indication indicates the transmission multiplexing mode applied when a terminal is scheduled to perform a multi-panel simultaneous transmission from multiple panels to multiple Transmission and Reception Points (TRPs).

29. A terminal, comprising:
a processor; and
a transceiver connected to the processor, wherein
the processor is configured to load and execute executable instructions to implement the method for indicating the transmission multiplexing mode according to any one of claims 1 to 13.

30. A network device, comprising:
a processor; and
a transceiver connected to the processor, wherein
the processor is configured to load and execute executable instructions to implement the method for indicating the transmission multiplexing mode according to any one of claims 14 to 26.

31. A chip, comprising at least one of a programmable logic circuit or program instructions, wherein when the chip is running, the method for indicating the transmission multiplexing mode according to any one of claims 1 to 13, or the method for indicating the transmission multiplexing mode according to any one of claims 14 to 26 is implemented.

32. A computer-readable storage medium, having at least one instruction, at least one program, a code set, or an instruction set stored therein, wherein the at least one instruction, the at least one program, the code set, or the instruction set is loaded and executed by a processor to implement the method for indicating the transmission multiplexing mode according to any one of claims 1 to 13, or the method for indicating the transmission multiplexing mode according to any one of claims 14 to 26.

33. A computer program product, comprising computer instructions stored in a computer-readable storage medium, wherein a processor of a computer device reads the computer instructions from the computer-readable storage medium, and the processor executes the computer instructions, so that the computer device is caused to perform the method for indicating the transmission multiplexing mode according to any one of claims 1 to 13, or the method for indicating the transmission multiplexing mode according to any one of claims 14 to 26.
